# EUROPEAN PATENT APPLICATION

(11) **EP 2 801 477 A1**
(43) Date of publication of application: **12.11.2014**
(21) Application number: 13166746.1
(22) Date of filing: 07.05.2013
(51) Int. Cl.: B32B 27/10, B32B 38/00, B32B 38/08, B32B 38/10

(54) **Flexible laminate made of composite material**

(71) Applicant: Rivierasca S.p.A., 24040 Bottanuco (BG) (IT)
(72) Inventor: Bonaiti, Giacomo Filippo Maria, 20121 MILANO (IT)
(74) Representative: Biggi, Cristina

(57) **Abstract**

The invention relates to a laminate made of composite material comprising at least one layer of nonwoven fabric impregnated with a cross-linked thermosetting resin. The nonwoven fabric is preferably made of polypropylene fibres and the thermosetting resin comprises a mixture of a flexible unsaturated polyester resin and a non-flexible unsaturated polyester resin.

The laminate is used to cover at least one surface of an insulated panel comprising an inner layer, made for example of polyurethane foam. Panels thus made are used for the roofing of facilities intended for rearing animals or roofing or vertical claddings for construction.

## Description

### FIELD OF THE INVENTION

The present invention relates to a flexible laminate made of composite material, usable for the production of insulated panels intended for the construction industry and/or husbandry industry.

### BACKGROUND OF THE INVENTION

An insulated panel is normally made up of a top metal sheet (with a thickness of 0.3 to 2 mm), normally corrugated, an underlying layer of insulating material, for example rigid polyurethane foam, rock wool or polystyrene (with a density of 15 to 60 Kg/m³), and a bottom finishing metal sheet, with slight ribs or smooth.

Insulated panels are typically used for roofing or vertical (or horizontal) cladding in the industrial and civil construction industry. Another application of interest is in the husbandry industry, where insulated panels are used for the roofing of facilities for rearing animals, for example chicken sheds for rearing chickens in battery cages. For this particular application the panels must be resistant to animal waste, which is particularly corrosive, and at the same time have a modest cost.

The market for insulated panels for the husbandry industry can be quantified as several tens of millions of square metres per year.

At the beginning of the 21st century, a panel was introduced into the market whose bottom finishing layer consisted of a flat fibreglass-reinforced polyester (FRP) laminate, more commonly known as fibreglass. This product was developed for husbandry applications, where animal waste, as is well known, is extremely corrosive to metallic materials (in particular in pig and poultry farms). To remedy the problem of rust, traditional products offered bitumen paper (also called felt paper), embossed ribbed aluminium or stainless steel as the bottom finish of the panel. However, both felt paper and ribbed aluminium were too delicate and unable to withstand periodic washing with pressure systems (high pressure water jet machines), whereas stainless steel was excessively costly.

Fibreglass was chosen because of the impossibility of it rusting as well as its resistance to the chemical agents formed by animal waste (ammonia).

Another advantage of fibreglass is that it is compatible with polyurethane foams, unlike other plastic laminates (see polyolefin and PVC), which are not compatible with (i.e. cannot be glued to) expanded polyurethanes.

Lastly, fibreglass can be produced in small thicknesses (less than 1 mm) with sufficient mechanical properties which contribute to the rigidity and capacity of the finished panel, at a price that is undoubtedly competitive compared to stainless steel. Over the years, nearly all Italian manufacturers of insulated panels have introduced a fibreglass finish for husbandry applications into their catalogues. Though lower than that of stainless steel, the price of fibreglass is not competitive, however, with that of felt paper and ribbed aluminium and it is for this reason that, above all in the last two years, manufacturers of fibreglass laminates have been seeking to decrease the thickness, and hence cost, of the product. At the beginning of the twenty-first century, the standard thickness for fibreglass laminates intended as roofing panels for the husbandry industry was 0.52 mm, with a weight of 750 g/m², while in 2010 it arrived at 0.42 mm with a weight of 570 g/m².

Despite this excellent progress in reducing the thickness, and hence cost, of fibreglass laminates, there still remains the problem of the scant flexibility of fibreglass, as well as the need to further reduce the thickness to lower costs.

Laminate flexibility is demanded by the market, as it serves to overcome some problems tied to the cycle of production of the panel and its installation. In fact, traditional production provides for the fibreglass laminate to protrude by about 10 mm on one side of the panel. This "flap" has the function of an edge cover, that is, of concealing the crack that is formed when two panels are placed alongside each other. This "flap", given the very nature of the fibreglass produced up to today, is very fragile and exposed to breakage during handling operations and installation. To remedy this problem, manufacturers would like to be able to bend it by 90 degrees, incorporating it into the body of the panel or, alternatively, allow it to protrude but render it less fragile. By its nature fibreglass is a material that does not lend itself to being bent with excessively small radiuses of curvature and beyond a certain limit (depending on the thickness and content of glass fibres) it will break abruptly.

Having noted these requirements of the market (lower cost and greater flexibility), the Applicant has addressed the problem of fulfilling the needs of manufacturers of insulated panels seeking laminates for such panels, laminates which are competitive with felt paper, ribbed aluminium and 0.42-0.52 mm-thick fibreglass in terms of cost, and endowed with greater flexibility than these materials, above all than the fibreglass already on the market.

The object of the invention is thus to provide a laminate flexible enough to be bent with an angle of at least 90 degrees and a radius of curvature of less than 1 mm without the laminate breaking and preferably competitive with felt paper, ribbed aluminium and fibreglass in terms of price.

### SUMMARY OF THE INVENTION

The present invention relates to a laminate made of composite material comprising at least one layer of nonwoven fabric impregnated with at least one thermosetting resin. The laminate of the invention can be bent with an angle of at least 90 degrees and a radius of curvature of less than 1 mm without breaking. The laminate of the invention has a thickness comprised between 0.1 and 1 mm, preferably between 0.25 and 0.35 mm. Thicknesses of less than 0.42 mm enable large savings in the production costs of the insulated panels.

The invention also relates to an insulated panel (also called sandwich panel) comprising a layer of insulating material, for example polyurethane foam, rock wool, mineral wool or polystyrene, covered on at least one surface with a laminate made of composite material according to the present invention. The insulated panel thus obtained is used as roofing or vertical (or horizontal) cladding in the industrial and civil construction industry or for the roofing of facilities intended for rearing animals.

### BRIEF DESCRIPTION OF THE FIGURES

The invention will be described hereunder also with reference to the appended figures, in which:
Figure 1 shows one embodiment of the process for producing the laminate of the invention;
Figure 2 shows an alternative embodiment of the process for producing the laminate of the invention.

### DETAILED DESCRIPTION OF THE INVENTION

In greater detail, the invention relates to a laminate comprising at least one layer of nonwoven fabric impregnated with at least one thermosetting resin.

The laminate of the invention has a weight comprised between 100 and 1500 g/m², preferably between 300 and 400 g/m².

The at least one thermosetting resin is preferably selected from among: an unsaturated polyester resin (preferably orthophthalic, isophthalic, dicyclopentadiene, isophthalic neopentyl glycol), epoxy resin, polyurethane resin, phenolic resin, and acrylic resin. The preferred thermosetting resin is an unsaturated orthophthalic polyester resin. Preferably, the thermosetting resin is a high performance resin, for example having high viscosity and reactivity. Examples of unsaturated polyester resin are: R80X0 polyester resin produced by Poliver S.p.A., SIRESTER FS0 800 polyester resin produced by SIR S.p.A. and POLIPLAST R14 polyester resin produced by CARLO RICCO' e F.LLI S.p.A.

In a more preferred embodiment, the at least one thermosetting resin is a mixture of a non-flexible thermosetting resin and a flexible thermosetting resin according to the definition set forth above. Flexible thermosetting resin means, for example in the case of polyester resins, a polyester resin obtained by reacting adipic acid with a long-chain polyol, preferably a long-chain glycol. The combination of these monomers assures good characteristics in terms of elongation at break of the cross-linked resin. Like polyester resin, the other flexible resins of the invention are obtained from monomers known in the art which are capable of imparting good characteristics of flexibility to the final product, in particular comprising chains of polymers sufficiently long and spaced apart to endow the resin, once cross-linked, with elongations at break higher than 5%.

Non-flexible thermosetting resin means a thermosetting resin that does not possess any particular characteristics of flexibility, since it is obtained by reacting monomers that do not have any particular flexibilizing properties.

The at least one non-flexible thermosetting resin is preferably selected from among: unsaturated polyester resin, epoxy resin, polyurethane resin, phenolic resin, and acrylic resin. The preferred non-flexible thermosetting resin is an unsaturated orthophthalic polyester resin.

In the embodiment in which a mixture of a non-flexible thermosetting resin and a flexible thermosetting resin is used, the former is present in amount comprised between 60% and 90% by weight, preferably between 75% and 85% by weight. The flexible thermosetting resin is comprised in an amount comprised between 10% and 40% in, preferably between 15% and 25% by weight.

The at least one thermosetting resin may also comprise at least one additive selected from among: at least one catalyst selected preferably between organic peroxides and/or photoinitiators; at least one accelerating agent preferably selected between cobalt octoate and/or diethylacetoacetamide; at least one inhibitor preferably selected between benzophenone and/or tert butylcatechol; at least one colouring agent.

The at least one thermosetting resin is added to the nonwoven fabric in an amount comprised between 90 and 150 g of resin per 30g of nonwoven fabric.

The at least one nonwoven fabric comprises a plurality of natural and/or synthetic fibres, randomly oriented, with a minimum length of 2 mm. The fibres are cohered using thermal, chemical or mechanical systems, known in the art for the preparation of nonwoven fabrics. The fibres can be selected, for example, from among: polypropylene (PP) fibres, polyethylene terephtalate (PET) fibres, polyamide (PA) fibres, polyethylene (PE) fibres, viscose fibres, wool fibres, linen fibres, hemp fibres, cotton fibres, kenaf fibres, glass fibres, basalt fibres, carbon fibres, Kevlar fibres, and fibres extracted from animal skins and hides (for example, camels, goats, cows, horses).

The nonwoven fabric is prepared from the fibres indicated using techniques known in the art for the preparation of these materials. For example, the "spunlace" technique (also definable as water needle punching) or the "spunbond" technique (which involves a first extrusion step to form the fibres and then a step of cohering the fibres with thermal, chemical or mechanical systems) can be used. These techniques are very well known in the art and commonly used for the preparation of nonwovens; therefore, it is not deemed necessary to describe them further.

The nonwoven fabrics, preferably, can be dyed, printed with decorations of any kind or finished on one or both surfaces with other materials (for example, aluminium powder).

Preferably, the fibres used to obtain the nonwoven fabric are polypropylene, polyethylene terephtalate or glass fibres.

The nonwoven fabric obtained from glass fibers is also called "velovetro" in Italian.

The nonwoven fabric has a weight comprised between 10 and 120 g/m², preferably between 30 and 70 g/m².

In a preferred embodiment, the laminate of the invention comprises more than one nonwoven fabric, preferably two or three nonwoven fabrics. More than one nonwoven fabric is used when the thickness of the nonwoven fabric is around the lower limit described above, in order to ensure better planarity of the final laminate. If nonwoven fabric thicknesses around the upper limit described above are used, a single nonwoven fabric can also be used, since the planarity of the final laminate will in any case be sufficient. In a preferred embodiment, the laminate of the invention comprises at least one nonwoven fabric impregnated with a mixture composed of a non-flexible unsaturated polyester resin and a flexible unsaturated polyester resin. Preferably, the nonwoven fabric is a nonwoven fabric of polyethylene fibres. The laminate of the invention is produced with a lamination process, preferably continuous.

The process for producing the laminate of the invention comprises the steps of:
a) Applying the at least one thermosetting resin to the at least one nonwoven fabric;
b) Calendering the at least one nonwoven fabric impregnated with the at least one thermosetting resin between two removable films (release films);
c) Subjecting the at least one nonwoven fabric impregnated with the at least one thermosetting resin to cross-linking by applying heat.
d) Removing the two removable films at the exit of the calender.

Preferably, the process further comprises a step of winding the laminate on a reel after polymerization. Advantageously, before being wound on the reel, the laminate is trimmed and cut according to need.

In the embodiment in which the process is conducted continuously, the above-described steps are performed consecutively without any interruption between one step and the next. In particular, the two removable films, preferably made of polyethylene terephtalate, are fed out from respective reels and sent to the calender together with the at least one nonwoven fabric, which is inserted between the two films.

The at least one thermosetting resin is applied on the at least one nonwoven fabric before the latter enters the calender.

The addition of at least one additive to the resin can be done by continuous metering or else by premixing the substances before the start of the process.

The two removable films serve to homogenize the thickness of the material and avoid contact with the oxygen in the air, which inhibits polymerization.

The cross-linking after calendering is performed with IR, UV or UVA lamps and/or in hot-air ovens or in any case by bringing energy into the system.

The step of cross-linking the resin is preferably performed by heating the impregnated laminate in temperature-controlled ovens that deliver or remove the heat necessary to favour polymerization by cross-linking.

In the embodiment of the invention in which two or more nonwoven fabrics are used to form the laminate, the nonwoven fabrics are fed out from respective reels and enter the calender sandwiched between the two removable films.

The cross-linking of the resin takes place in a period of time comprised between 1 and 5 hours.

The at least one nonwoven fabric can be obtained from the fibres listed above.

The at least one thermosetting resin is as listed above.

The at least one thermosetting resin can be a mixture of a non-flexible thermosetting resin and a flexible thermosetting resin. In this case, mixing of the resins, in the percentages indicated above, can take place before the start of the process or directly and continuously with the use, for example, of two metering pumps.

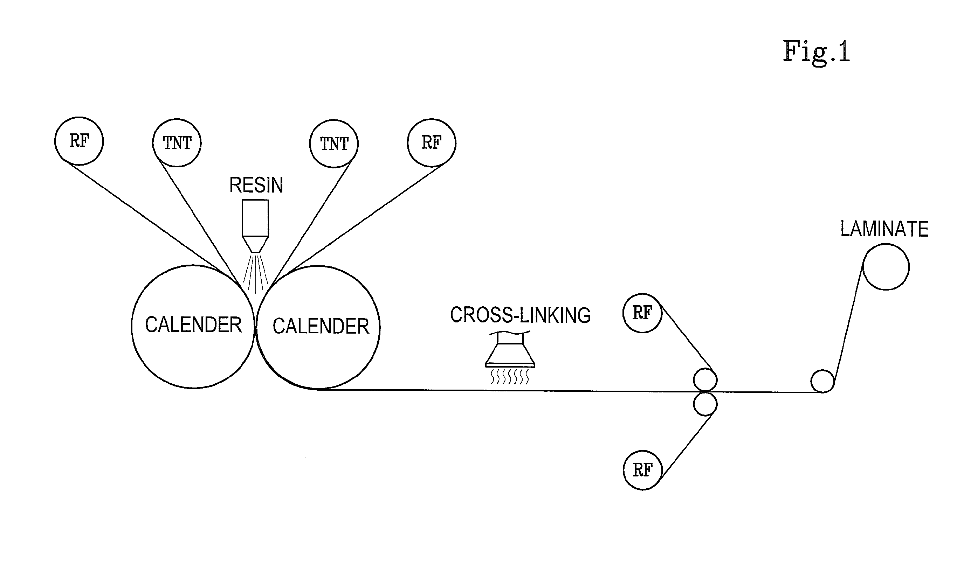

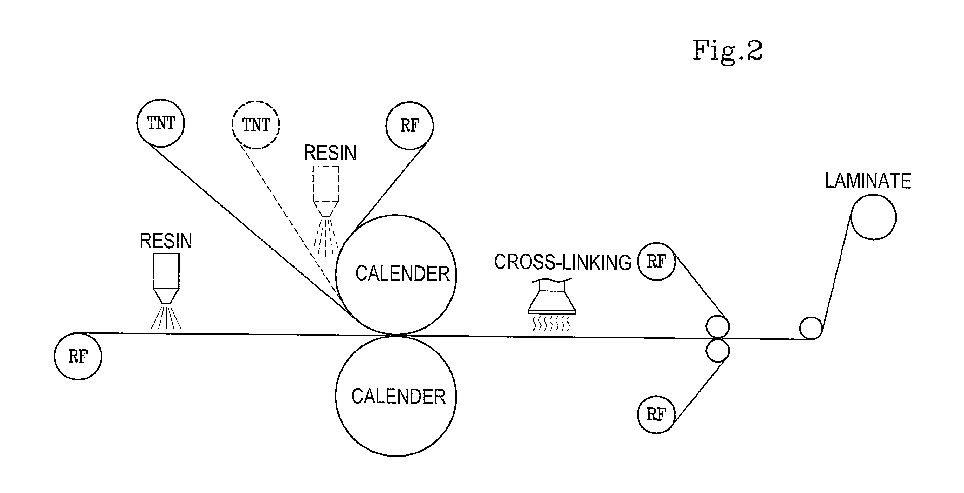

Two examples of preferred embodiments of the process of the invention are illustrated in Figs. 1 and 2.

Figure 1 refers to a continuous process and shows the two rollers of the calender, between which the two nonwoven fabrics (TNT) coming from respective reels are calendered after first being impregnated, before entering the calendar, with at least one thermosetting resin supplied by a "dispenser". The two nonwoven fabrics are calendered between two removable films (RF) in such a way as to form a sandwich.

The laminate is conveyed to the step of cross-linking, performed by applying heat and/or UV radiation.

At the exit of the ovens the two removable films are removed and rewound on respective reels, releasing the resin-impregnated laminate of the invention. Once the time necessary for cross-linking the resin has elapsed, the finished laminate is trimmed to the sizes required by the customer and wound on a reel. Figure 2 shows a second embodiment of the process in which one of the two removable films is fed out from a reel and horizontally conveyed toward the calender, while the second removable film is inserted into the calender vertically together with one or two nonwoven fabrics (TNT). In this embodiment, the resin can be applied on the horizontal removable film before the latter comes into contact with the nonwoven fabric, or else it can be applied to the nonwoven fabric before it enters the calender.

The processing steps downstream of the calender correspond to those described above for the process of Fig. 1.

The invention also relates to a laminate obtainable through the process of the invention.

The laminate of the invention can be used to prepare an insulated panel (also called a sandwich panel) that can be used as a vertical covering or cladding in the civil and industrial construction industry or for the roofing of facilities for rearing animals, in particular for rearing poultry or pigs.

The insulated panel comprises a layer of polyurethane foam, rock wool, mineral wool or polystyrene, covered on at least one of the surfaces with at least one laminate according to the present invention. Preferably, the insulated panel of the invention comprises a layer of polyurethane foam and is covered on at least one of the surfaces, preferably only one, with a laminate according to the invention.

The insulated panel is produced according to methods known in the art.

The advantages of the insulated panel of the invention are connected to the use of the laminate of the invention: lower cost and greater flexibility. The flexibility of the laminate of the invention makes it possible to obtain excellent performance with respect to the panel's installation, allowing the edge cover "flap" to be bent without the laminate breaking. The cost of the panel is reduced when laminates with a thickness of less than 0.42 mm are used.

### EXAMPLES

2 layers of PP (polypropylene) spunlace or spundonded nonwoven fabric weighing 30 g/m² each
   Mixture of unsaturated polyester resin (80%) and unsaturated polyester resin flexibilized by glycols (20%)
   Laminate weighing weighing 250 ±5% g/m², with a thickness of 0.2 +5% mm.
2 layers of PP (polypropylene) spunlace or spundonded nonwoven fabric weighing 30 g/m² each, with 1 middle layer of glass-fibre nonwoven fabric (velovetro) 40 g/m².
   Mixture of unsaturated polyester resin (80%) and unsaturated polyester resin flexibilized by glycols (20%)
   Laminate weighing 510 +5% g/m², with a thickness of 0.4 ±5% mm.
1 layer of PET (polyethylene terephtalate) spunlace or spundonded nonwoven fabric weighing 70 g/m².
   Mixture of unsaturated polyester resin (83.6%) and unsaturated polyester resin flexibilized by glycols (16.4%).
   Laminate weighing 440 +5% g/m², with a thickness of 0.5 ±5% mm.
1 layer of PET (polyethylene terephtalate) spunlace or spundonded nonwoven fabric weighing 35 g/m².
   Mixture of unsaturated polyester resin (83.6%) and unsaturated polyester resin flexibilized by glycols (16.4%).
   Laminate weighing 270 +5% g/m², with a thickness of 0.2 ±5% mm.
1 layer of PP (polypropylene) spunlace or spundonded nonwoven fabric weighing 35 g/m².
   Mixture of unsaturated polyester resin (84%) and unsaturated polyester resin flexibilized by glycols (16%).
   Laminate weighing 135 ±5% g/m², with a thickness of 0.1 +5% mm.
1 layer of glass-fibre nonwoven fabric (velovetro) weighing 40 g/m².
   Mixture of unsaturated polyester resin (50%) and unsaturated polyester resin flexibilized by glycols (50%).
   Laminate weighing 300 ±5% g/m², with a thickness of 0.25 +5% mm.

## Claims

1. A flexible laminate made of composite material, usable for the production of an insulated panel, comprising at least one layer of nonwoven fabric impregnated with at least one thermosetting resin.

2. The laminate according to claim 1, wherein said at least one thermosetting resin is preferably selected from among: unsaturated polyester resin, preferably orthophthalic, isophthalic or dicyclopentadiene, isophthalic neopentyl glycol; epoxy resin, polyurethane resin, phenolic resin and acrylic resin.

3. The laminate according to claim 1 or 2, wherein said at least one thermosetting resin is a mixture of a non-flexible thermosetting resin and a flexible thermosetting resin.

4. The laminate according to claim 4, wherein said non-flexible thermosetting resin is comprised in an amount comprised between 60% and 90% by weight, more preferably between 75% and 85% by weight and said flexible thermosetting resin is comprised between 10% and 40% by weight, more preferably between 15% and 25% by weight.

5. The laminate according to claim 3 o 4, wherein said flexible thermosetting resin is an unsaturated orthophthalic polyester resin, preferably obtained by reacting adipic acid with a long-chain polyol, preferably a glycol.

6. The laminate according to any one of claims 1 to 5, wherein said at least one thermosetting resin is present in an amount comprised between 90 and 150 g of resin per 30g of nonwoven fabric.

7. The laminate according to any one of claims 1 to 6, wherein said at least one nonwoven fabric comprises a plurality of natural and/or synthetic fibres, randomly oriented, with a minimum length of 2 mm, preferably cohered with the spunbond or spunlace technique.

8. The laminate according to claim 7, wherein said fibres are selected from among: polypropylene (PP) fibres, polyethylene terephtalate (PET) fibres, polyamide (PA) fibres, polyethylene (PE) fibres, viscose fibres, wool fibres, linen fibres, hemp fibres, cotton fibres, kenaf fibres, glass fibres, basalt fibres, carbon fibres, Kevlar fibres, and fibres extracted from animal skins and hides.

9. The laminate according to any one of claims 1 to 8, comprising at least two layers of nonwoven fabrics.

10. The laminate according to any one of claims 1 to 9, said laminate being bendable with an angle of at least 90 degrees and a radius of curvature of less than 1 mm without breaking.

11. The laminate according to any one of claims 1 to 10, having a thickness comprised between 0.1 and 1 mm, preferably between 0.25 and 0.35 mm.

12. The laminate according to any one of claims 1 to 11, comprising at least one nonwoven fabric made of polyethylene fibres impregnated with a mixture composed of a non-flexible unsaturated polyester resin and a flexible unsaturated polyester resin.

13. A use of the laminate according to any one of claims 1 to 12 for the production of insulated panels.

14. An insulated panel comprising a layer of insulating material selected from among polyurethane foam, rock wool, mineral wool and polystyrene, covered on at least one surface with a flexible laminate made of composite material according to any one of claims 1 to 12.

15. A use of the insulated panel according to claim 14 to construct vertical coverings or claddings in the industrial and civil construction industry or to construct roofing for facilities intended for rearing animals.

16. A process for producing the laminate according to any one of claims 1 to 12, comprising the steps of:
a) Applying at least one thermosetting resin to at least one nonwoven fabric;
b) Calendering the at least one nonwoven fabric impregnated with the at least one thermosetting resin between two removable films (release films);
c) Subjecting the at least one nonwoven fabric impregnated with the at least one thermosetting resin to cross-linking by applying heat.
d) Removing the two removable films at exit of the calender.
